# EUROPEAN PATENT SPECIFICATION

(11) **EP 4 099 006 B1**
(45) Date of publication and mention of the grant of the patent: **03.09.2025**
(21) Application number: 20916870.7
(22) Date of filing: 03.12.2020
(51) Int. Cl.: G01N 1/38, G01N 27/416

(54) **ELECTROLYTE ANALYSIS APPARATUS**
ELEKTROLYTANALYSATOR
APPAREIL D'ANALYSE D'ÉLECTROLYTE

(30) Priority: 29.01.2020 JP 2020012734
(43) Date of publication of application: 07.12.2022
(73) Proprietor: Hitachi High-Tech Corporation, Minato-ku Tokyo 105-6409 (JP)
(72) Inventor: KUMAGAI Takahiro, Tokyo 105-6409 (JP); MIYAKAWA Takushi, Tokyo 105-6409 (JP); IWASE Yuichi, Tokyo 105-6409 (JP); YAMAMOTO Haruyoshi, Tokyo 100-8280 (JP); KAWAHARA Tetsuji, Tokyo 105-6409 (JP)
(74) Representative: Strehl & Partner mbB
(86) International application number: PCT/JP2020/045114
(87) International publication number: WO 2021/153004

(56) References cited:
- JP-A- 2001 255 333
- JP-A- 2013 134 141
- JP-A- 2018 017 543
- JP-A- 2019 148 572
- JP-A- 2019 148 572
- JP-A- H 095 294
- JP-A- H 095 294
- JP-A- H06 109 686
- JP-A- S6 180 027
- JP-B2- 6 609 489
- JP-U- H03 104 856

## Description

### Technical Field

The present invention relates to an electrolyte analysis apparatus.

### Background Art

An electrolyte analysis apparatus is an apparatus that analyzes electrolyte components such as sodium (Na), potassium (K), or chlorine (Cl) in a biological sample such as serum or urine. As an analysis method used in the electrolyte analysis apparatus, for example, an ion selective electrode method (ISE method) is known in which an electrolyte concentration in a specimen is measured by measuring a potential difference between an ion selective electrode (ISE) and a reference electrode that generates a reference potential.

As a technique related to the ISE method, for example, PTL 1 discloses an electrolyte analysis apparatus including a dilution tank for diluting and containing a sample, a sample suction mechanism having a sample suction nozzle that suctions the sample diluted and contained in the dilution tank, an electrolyte measurement unit that measures an electrolyte concentration of the sample suctioned by the sample suction mechanism, an outer tube that surrounds the vicinity of a sample suction port of the sample suction nozzle, and a constant temperature water supply mechanism that circulates constant temperature water in the outer tube.

### Citation list

### Patent Literature

PTL 1: JP-A-2014-142307

JP H09 005294 A discloses an automatic chlorine ion analyzer with the features in the preamble of present claim 1. Other conventional analyzers are described in JP 6 609489 B2, JP 2018 017543 A, and JP 2019 148572 A.

### Summary of Invention

### Technical Problem

In the electrolyte analysis apparatus using the ISE method, an ion sensitive membrane in which a potential difference is generated in response to an ion component is attached to an ion selective electrode, and a potential that varies depending on an electrolyte concentration in a sample is measured. In order to keep the reference potential constant, the reference electrode is brought into contact with a solution called a reference electrode solution. Then, when the electrolyte concentration is derived, conversion to the electrolyte concentration is performed using the potential difference between the ion selective electrode and the reference electrode and a calibration curve obtained from calibration.

A relationship between the potential difference used in the ISE method and the concentration varies depending on a temperature. Therefore, when a measurement system changes in temperature when calibration is performed and when a concentration of a biological sample is measured, conversion from the obtained potential difference to the electrolyte concentration cannot be appropriately performed, and an error may occur in a measurement result. In particular, when a measurement reagent is switched or the apparatus is started up, a temperature of a measurement reagent to be introduced is likely to change, and thus it is difficult to perform appropriate measurement.

In the related art, in order to keep the temperature of the measurement system constant, constant temperature water whose temperature is managed circulates around the measurement system, and a preheating region is provided in a reagent flow path used for measurement.

However, when a temperature change that may occur is large, it is necessary to further expand the preheating region and to form a more complicated configuration. As a measure related to temperature change, for example, a method of performing dummy measurement for several operations after measurement having a large temperature change is started during intermittent measurement, or providing sufficient time before an apparatus has a uniform temperature when the apparatus is started up, is known. However, there is a problem that throughput is lowered.

The invention has been made in view of the above problems, and an object of the invention is to provide an electrolyte analysis apparatus capable of controlling a temperature of a reagent with a simpler configuration.

### Solution to Problem

The present application, for solving the above problems, provides an electrolyte analysis apparatus with the features defined in claim 1.

### Advantageous Effect

According to the invention, the temperature of the reagent can be controlled with a simpler configuration.

### Brief Description of Drawings

[FIG. 1] FIG. 1 is a diagram schematically showing the entire configuration of an electrolyte analysis apparatus according to a first illustrative example.
[FIG. 2] FIG. 2 is a diagram showing a relationship between the temperatures of a concentrated internal standard solution, pure water, and the internal standard solution diluted with pure water and restored.
[FIG. 3] FIG. 3 is a diagram schematically showing the entire configuration of an electrolyte analysis apparatus according to a second illustrative example.
[FIG. 4] FIG. 4 is a diagram schematically showing the entire configuration of an electrolyte analysis apparatus according to a third illustrative example.
[FIG. 5] FIG. 5 is a diagram schematically showing the entire configuration of an electrolyte analysis apparatus according to a fourth illustrative example.
[FIG. 6] FIG. 6 is a diagram schematically showing the entire configuration of an electrolyte analysis apparatus according to a fifth illustrative example.
[FIG. 7] FIG. 7 is a diagram schematically showing the entire configuration of an electrolyte analysis apparatus according to an embodiment.

### Description of Embodiments

Hereinafter, illustrative examples not falling under the claimed scope but useful for understanding the invention and an embodiment of the invention will be described with reference to the drawings. In the present embodiment, an electrolyte analysis apparatus in which a concentrated reagent (also referred to as a reagent stock solution or a concentrated internal standard solution) and pure water are diluted in a dilution and restoration unit and discharged into a dilution tank will be described as an example, but the invention is not limited thereto. For example, the invention can be applied to an electrolyte analysis apparatus in which a concentrated reagent and pure water are discharged into a dilution tank for dilution.

In addition, in the embodiment of the invention, an electrolyte analysis apparatus used alone for measurement will be described as an example, but the invention is not limited thereto. For example, the invention can also be applied to an electrolyte analysis apparatus mounted on an automatic analysis apparatus such as a biochemical automatic analysis apparatus, an immune automatic analysis apparatus, a mass analysis apparatus, or a coagulation analysis apparatus, a combined system thereof, or an automatic analysis system to which these are applied.

In the following description, a "specimen" is a generic term for analysis targets collected from a living body of a patient, and includes, for example, blood and urine. The "specimen" also includes an analysis target obtained by performing a predetermined pretreatment on these specimens.

### <First illustrative example not forming part of the present invention>

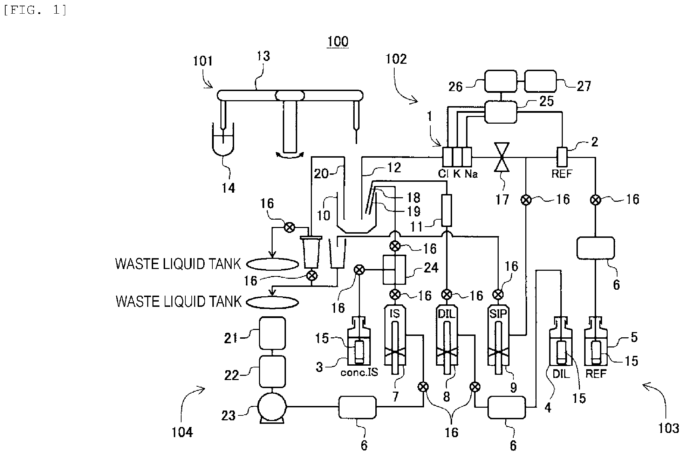

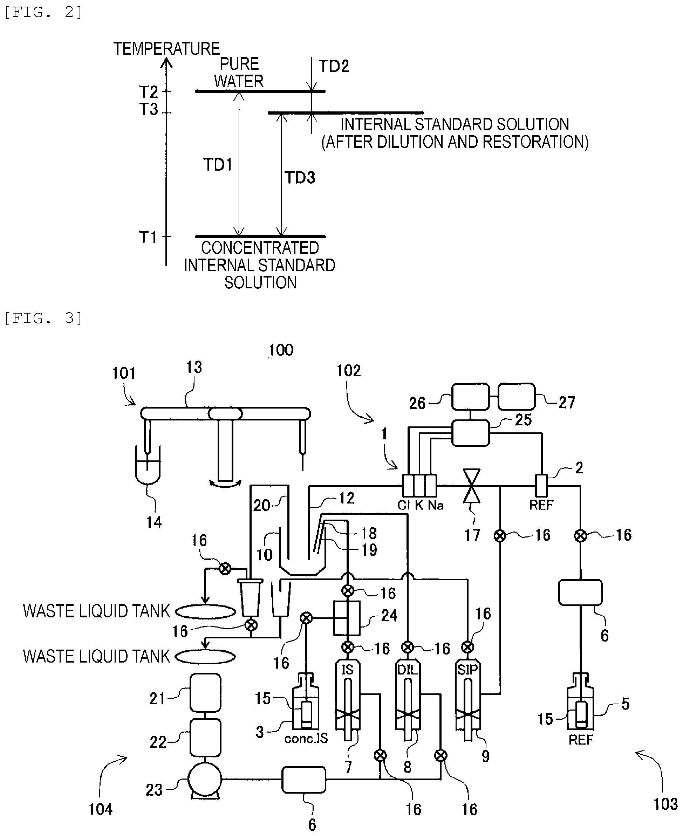

A first illustrative example will be described with reference to FIGS. 1 and 2.

FIG. 1 is a diagram schematically showing the entire configuration of an electrolyte analysis apparatus according to the present example.

In FIG. 1, an electrolyte analysis apparatus 100 schematically includes a specimen dispensing unit 101, an analysis unit 102, a reagent unit 103, and a mechanism unit 104.

The specimen dispensing unit 101 includes a specimen dispensing mechanism 13, a transport unit (not shown), and a specimen vessel 14.

A specimen to be measured is placed in the specimen vessel 14 and transported to the vicinity of the specimen dispensing mechanism 13 by the transport unit. The specimen dispensing mechanism 13 suctions the specimen held in the specimen vessel 14, dispenses the specimen by discharging the specimen into a dilution tank 10, and introduces the specimen into the electrolyte analysis apparatus 100.

The analysis unit 102 includes the dilution tank 10, a sipper nozzle 12, a diluent nozzle 18, an internal standard solution nozzle 19, a waste liquid suction nozzle 20, an ion selective electrode (ISE) 1, a reference electrode 2, a pinch valve 17, a voltmeter 25, an amplifier 26, and a computer 27.

The specimen discharged into the dilution tank 10 through dispensing of the specimen dispensing unit 101 is diluted by a diluent discharged from the diluent nozzle 18 to the dilution tank 10 and is stirred. The specimen (diluted specimen) diluted and stirred in the dilution tank 10 is suctioned by the sipper nozzle 12 and fed to the analysis unit 102, and waste liquid remaining in the dilution tank 10 is suctioned by the waste liquid suction nozzle 20 and discharged into a waste liquid tank.

A reference electrode solution stored in a reference electrode solution bottle 5 is fed to the reference electrode 2 by an operation of a sipper syringe 9 in a state where the pinch valve 17 is closed. By opening the pinch valve 17 in this state, a diluted specimen solution fed to a flow path of the ion selective electrode 1 and the reference electrode solution fed to a flow path of the reference electrode 2 come into contact with each other, and the ion selective electrode 1 and the reference electrode 2 are electrically connected to each other.

The computer 27 controls operations of the entire electrolyte analysis apparatus 100, and controls opening and closing operations of solenoid valves 16 provided in the specimen dispensing unit 101, the analysis unit 102, the reagent unit 103, and the mechanism unit 104, liquid feeding operations (liquid feeding amounts) of syringes 7, 8, and 9, and the like, and calculates a concentration of an electrolyte of the specimen based on a potential difference generated between the ion selective electrode 1 and the reference electrode 2 and a calibration curve obtained by calibration performed in advance.

Specifically, an ion sensitive membrane, whose electromotive force changes according to a concentration of a specific ion (for example, sodium ion (Na+), potassium ion (K+), or chlorine ion (Cl)) in the specimen, is attached to the ion selective electrode 1, and the ion selective electrode 1 outputs an electromotive force according to each ion concentration corresponding to the specimen. The computer 27 acquires an electromotive force between the ion selective electrode 1 and the reference electrode 2 via the voltmeter 25 and the amplifier 26, calculates the ion concentration in the specimen based on the acquired electromotive force, displays the calculated ion concentration on a display device (not shown) and stores the calculated ion concentration in a storage device.

In addition, the computer 27 discharges an internal standard solution adjusted to a constant concentration into the dilution tank 10 from the internal standard solution nozzle 19 during a period after specimen measurement and before next specimen measurement, performs measurement in the same manner as the specimen, and uses a measurement result to perform correction of potential fluctuation due to a temperature change or the like, that is, correction of a measurement result of the specimen.

The reagent unit 103 supplies a reagent used for measurement or cleaning, and includes a concentrated internal standard solution bottle 3, a diluent bottle 4, a reference electrode solution bottle 5, a degassing mechanism 6, filters 15, and a dilution and restoration unit 24.

The concentrated internal standard solution bottle 3 containing the concentrated internal standard solution (concentrated reagent) and the diluent bottle 4 containing the diluent are respectively connected to the internal standard solution nozzle 19 and the diluent nozzle 18 by flow paths via the filters 15. The internal standard solution nozzle 19 and the diluent nozzle 18 are provided in the dilution tank 10 with tip ends introduced therein. The reference electrode solution bottle 5 containing a capture electrode solution is connected to the reference electrode 2 by a flow path via the filter 15.

The concentrated internal standard solution contained in the concentrated internal standard solution bottle 3 is obtained by concentrating the internal standard solution to a known concentration, and the internal standard solution to be used for measurement is generated by diluting and restoring the concentrated internal standard solution to a predetermined concentration with the diluent.

The dilution and restoration unit 24 is provided in a flow path from the concentrated internal standard solution bottle 3 to the internal standard solution nozzle 19, and is connected to a pure water production device 21 via the flow path. The dilution and restoration unit 24 dilutes and restores the concentrated internal standard solution with pure water at a predetermined ratio. The pure water referred to herein may be water that does not contain a certain amount or more of impurities, or may be water after being subjected to a deionization treatment. Degassing mechanisms 6 are connected to the flow path between the pure water production device 21 and the dilution and restoration unit 24, the flow path between the diluent bottle 4 and the dilution tank 10, and the flow path between the reference electrode solution bottle 5 and the reference electrode 2, and degassed solutions are discharged into the dilution tank 10.

The dilution and restoration unit 24 described above is preferably provided in the flow path between the concentrated internal standard solution bottle 3 and the dilution tank 10, but the invention is not limited thereto. For example, a pure water nozzle used for supplying pure water may be provided in the dilution tank 10, and dilution and restoration of the concentrated internal standard solution using pure water may be performed in the dilution tank 10.

The mechanism unit 104 includes the internal standard solution syringe 7, the diluent syringe 8, the sipper syringe 9, the solenoid valves 16, and the like, and performs various operations such as liquid feeding.

The concentrated internal standard solution and the pure water are introduced into the dilution and restoration unit 24 at a constant ratio by operations of the internal standard solution syringe 7 and the solenoid valves 16, to obtain the internal standard solution. Accordingly, the concentrated internal standard solution is diluted with pure water and adjusted to a predetermined concentration.

Here, a liquid temperature of the concentrated internal standard solution in the concentrated internal standard solution bottle 3 gradually approaches a room temperature with a lapse of time from setting. However, the liquid temperature in the concentrated internal standard solution bottle 3 immediately after setting is close to a storage state temperature. In general, a minimum value of the storage state temperature is set to about 15°C, and a guaranteed use temperature and a supply water temperature of the electrolyte analysis apparatus 100 are generally set to about 30°C. Therefore, a maximum temperature difference of 15°C or more may be generated between the concentrated internal standard solution and the pure water used for dilution. Therefore, a temperature of the internal standard solution generated by dilution using pure water changes with a change in the liquid temperature in the bottle.

As described above, when the liquid temperature used for measurement is changed, concentration conversion from a voltage value generated in the ion selective electrode 1 may not be appropriately performed, and the measurement may not be appropriately performed. Therefore, in the present illustrative example, a dilution ratio in the dilution and restoration unit 24 is controlled in order to appropriately perform the measurement, that is, to generate the internal standard solution at a constant temperature (more specifically, a temperature which can be easily estimated based on a temperature of an environment in which the electrolyte analysis apparatus 100 is provided, and a temperature at which an error that affects the measurement falls within a predetermined acceptable range) by dilution and restoration with pure water regardless of the temperature of the concentrated internal standard solution.

Specifically, the dilution and restoration of the concentrated internal standard solution is performed using pure water, which is used in the electrolyte analysis apparatus 100 and is estimated to have a temperature as close as possible to that of the environment in which the electrolyte analysis apparatus 100 is provided. That is, in the present illustrative example in which the concentrated internal standard solution is diluted and restored using such pure water, at least the concentrated internal standard solution is diluted with the supplied pure water at a ratio (volume ratio) greater than concentrated internal standard solution: pure water = 1:1 (a concentrated internal standard solution amount < a pure water amount). More preferably, the concentrated internal standard solution is diluted with pure water at a volume ratio such that a difference between the temperature of the internal standard solution generated by dilution and the temperature of pure water (diluent) is 1°C or less. According to knowledge experimentally obtained by the inventors of the present application, for example, when a minimum temperature (storage temperature or the like) estimated in the concentrated internal standard solution is set to 15°C, and a maximum temperature (maximum use temperature or the like in a specification of the electrolyte analysis apparatus 100) estimated as the temperature of pure water is set to 32°C, a difference between the temperature of the internal standard solution generated by dilution and the temperature of pure water (diluent) can be 1°C or less by diluting the concentrated internal standard solution with the supplied pure water at a ratio (volume ratio) equal to or greater than concentrated internal standard solution: pure water = 1:16 (a ratio at which the volume ratio of the pure water to the concentrated internal standard solution becomes 16 times or more). Since the temperature of the pure water is estimated to be a constant temperature close to the temperature of the environment in which the electrolyte analysis apparatus 100 is provided, changes in the temperature of the internal standard solution generated by dilution for each measurement is 1°C or less regardless of the liquid temperature in the concentrated internal standard solution bottle 3. As a result, measurement using the internal standard solution at an appropriate temperature can be performed without depending on the temperature of the concentrated internal standard solution in the concentrated internal standard solution bottle 3 provided in the electrolyte analysis apparatus 100, and appropriate measurement can be performed.

FIG. 2 is a diagram showing a relationship between the temperatures of the concentrated internal standard solution, the pure water, and the internal standard solution diluted and restored with pure water.

As shown in FIG. 2, for example, when the concentrated internal standard solution at a temperature T1 is diluted and restored with pure water at a temperature T2, if the concentrated internal standard solution is diluted with the pure water at a ratio greater than concentrated internal standard solution: pure water = 1:1 (a concentrated internal standard solution amount < a pure water amount), the internal standard solution is generated such that an absolute value of a temperature difference TD2 between the internal standard solution (temperature T3) obtained by dilution and restoration and the pure water (temperature T2) is smaller than an absolute value of a temperature difference TD3 between the concentrated internal standard solution (temperature T1) and the internal standard solution (temperature T3).

In the present illustrative example, the pure water produced by the pure water production device 21 is temporarily stored in a supply water tank 22, is pumped by an appropriate pump 23 to pass through a degassing unit, and is then supplied into the apparatus. By storing the pure water in the supply water tank 22 for a sufficiently long time, the temperature of the pure water supplied to the apparatus becomes equal to the room temperature, and it is easy to manage the temperature of the entire electrolyte analysis apparatus 100 including a measurement system with reference to the room temperature. However, a pure water supply system is not limited to the system described above. For example, the supply water tank 22 and the degassing unit may be omitted, or the supply of pure water may be controlled using a syringe without providing the pump 23.

Thus, the pure water supplied into the apparatus is fed to the dilution and restoration unit 24 by opening and closing of the solenoid valves and the operation of the internal standard solution syringe 7, and mixed with the concentrated internal standard solution in the dilution and restoration unit 24 to generate an internal standard solution having a predetermined concentration.

The generated internal standard solution and diluent are fed to the dilution tank 10 by the operations of the internal standard solution syringe 7, the diluent syringe 8, and the solenoid valve. In order to avoid an influence of a temperature variation of the diluent on the measurement, the temperature of the diluent is controlled to be within a certain range via a preheating unit 11.

Here, the reagent unit 103 and the mechanism unit 104 form a reagent generation unit for diluting and restoring a reagent stock solution having a concentration higher than a predetermined ion concentration with pure water to generate a reagent having the predetermined ion concentration. The specimen dispensing unit 101, the dilution tank 10 of the analysis unit 102, the reagent unit 103, and the mechanism unit 104 form a specimen dilution unit for diluting a specimen to be analyzed with a diluent to generate a diluted specimen.

Operations of the present illustrative example configured as above will be described.

The specimen separated into the specimen vessel 14 is transported to the specimen dispensing unit 101 by the transport mechanism (not shown). The specimen is dispensed from the specimen vessel 14 by the specimen dispensing mechanism 13 in the specimen dispensing unit 101 and discharged into the dilution tank 10. After the specimen is dispensed into the dilution tank 10, the diluent is discharged from the diluent bottle 4 by operations of the diluent syringe 8 and the solenoid valve 16 via the diluent nozzle to dilute the specimen. In order to prevent bubbles from being generated due to a change in temperature or pressure of the diluent in the flow path, a degassing treatment is performed by the degassing mechanism 6 provided in the flow path of diluent. The diluted specimen is suctioned into the ion selective electrode 1 by operations of the sipper syringe 9 or the solenoid valve 16.

In addition, the reference electrode solution is fed from the reference electrode solution bottle 5 to the reference electrode by the pinch valve 17 and the sipper syringe 9, and the diluent and the reference electrode solution come into contact with each other, and thereby the ion selective electrode 1 and the reference electrode 2 are electrically connected to each other. Thus, the electromotive force corresponding to the concentration of the diluent generated by the ion selective electrode is measured using the voltmeter 25 and the amplifier 26 with reference to the reference electrode 2. Before and after the specimen measurement, the concentrated internal standard solution is diluted to a predetermined concentration with pure water, the generated internal standard solution is discharged into the dilution tank 10 by the internal standard solution syringe 7, and the internal standard solution is measured by the same operation as the specimen measurement. Based on the measured potential difference and the result obtained by calibration performed in advance, calculation is performed by the computer 27 to calculate an electrolyte concentration in the specimen.

Effects of the present illustrative example configured as above will be described.

A relationship between the potential difference used in an ISE method and the concentration varies depending on a temperature. Therefore, in a case where the measurement system changes in temperature when calibration is performed and when a concentration of a biological sample is measured, conversion from the obtained potential difference to the electrolyte concentration cannot be appropriately performed, and an error may occur in the measurement result. In particular, when a measurement reagent is switched or the apparatus is started up, a temperature of the measurement reagent to be introduced is likely to change, and thus it is difficult to perform appropriate measurement.

In the related art, in order to keep the temperature of the measurement system constant, constant temperature water whose temperature is managed circulates around the measurement system, and a preheating region is provided in a reagent flow path used for measurement. However, when a temperature change that may occur is large, it is necessary to further expand the preheating region and to form a more complicated configuration. As a measure related to temperature change, for example, a method of performing dummy measurement for several operations after measurement having a large temperature change is started during intermittent measurement, or providing sufficient time before an apparatus has a uniform temperature when the apparatus is started up, is known. However, there is a problem that throughput is lowered.

On the other hand, in the present illustrative example, the electrolyte analysis apparatus 100 measures a concentration of a specific ion in the specimen based on a result of measuring a reagent having a predetermined ion concentration with the ion selective electrode 1, and includes a reagent generation unit (for example, the reagent unit 103 and the mechanism unit 104) for diluting and restoring a reagent stock solution (concentrated internal standard solution) having a concentration higher than a predetermined ion concentration with pure water to generate a reagent having the predetermined ion concentration, and the reagent generation unit generates the reagent such that the absolute value of the temperature
difference between the reagent obtained by the dilution and restoration, and the pure water is smaller than the absolute value of the temperature difference between the reagent obtained by the dilution and restoration, and the reagent stock solution, so that the temperature of the reagent can be controlled with a simpler configuration.

### <Second illustrative example not forming part of the present invention>

A second illustrative example will be described with reference to FIG. 3.

In the present illustrative example, a diluted specimen is generated by diluting a specimen with pure water instead of a diluent in the first illustrative example.

FIG. 3 is a diagram schematically showing the entire configuration of an electrolyte analysis apparatus according to the present illustrative example. In the drawing, the same members as those of the first illustrative example are denoted by the same reference numerals, and descriptions thereof will be omitted.

In FIG. 3, the electrolyte analysis apparatus 100 has a configuration in which pure water supplied from the pure water production device 21 is held in a supply tank, and then a supply flow path for supplying the pure water to the device using the pump 23 branches to the diluent syringe 8 in addition to the internal standard solution syringe 7. A method of supplying pure water to the diluent syringe is preferably the system described above, but is not limited thereto. For example, a configuration of supplying pure water to the internal standard solution syringe 7 and a configuration of supplying pure water to the diluent syringe 8 may be independently provided.

When a specimen is diluted with pure water, a temperature difference between the original pure water and specimen dilution water after dilution is required to be sufficiently small. Specifically, it is necessary to control a temperature change to 1°C or less. In view of a fact that a management temperature of the specimen is about the same as a temperature of a concentrated internal standard solution, for example, when a diluted specimen is generated by dilution at a ratio of specimen: pure water = 1:16 or more (a ratio at which a volume ratio of the pure water to the specimen becomes 16 times or more), the diluted specimen is generated such that an absolute value of a temperature difference between the diluted specimen and the pure water is smaller than an absolute value of a temperature difference between the diluted specimen and the specimen, and the temperature change is 1°C or less.

Other configurations are the same as those of the first illustrative example.

In the present illustrative example configured as above, the same effect as those of the first illustrative example can also be obtained.

In addition, not only a liquid temperature of an internal standard solution but also a liquid temperature used for diluting the specimen becomes a temperature of the pure water, and thus the preheating unit 11 for temperature adjustment can be omitted. The same effect can also be obtained by providing the dilution and restoration unit 24 in a dilution water flow path and using a concentrated diluent concentrated to a concentration corresponding to a dilution ratio.

### <Third illustrative example not forming part of the present invention>

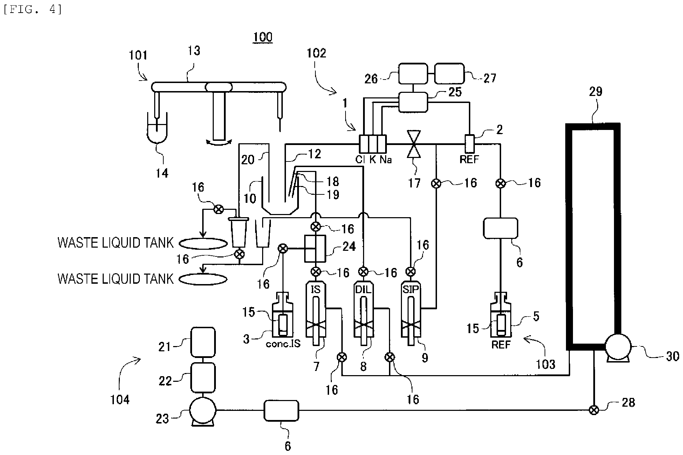

A third illustrative example of the invention will be described with reference to FIG. 4.

In the present illustrative example, a circulation path for circulating pure water is provided in the electrolyte analysis apparatus in the second illustrative example, and dilution of a concentrated internal standard solution (concentrated reagent) is performed with the pure water introduced from the circulation path.

FIG. 4 is a diagram schematically showing the entire configuration of an electrolyte analysis apparatus according to the present illustrative example. In the drawing, the same members
as those of the second illustrative example are denoted by the same reference numerals, and descriptions thereof will be omitted.

In FIG. 4, the electrolyte analysis apparatus 100 includes a pure water circulation path 29 that is provided on a flow path from the pump 23 to the internal standard solution syringe 7 and the diluent syringe 8 and through which the pure water sent from the pump 23 circulates in the electrolyte analysis apparatus 100, a pump 30 that circulates the pure water in the pure water circulation path 29, and a solenoid valve 28 provided on the flow path from the pump 23 to the pure water circulation path 29.

In the present illustrative example, the pure water used for diluting the concentrated internal standard solution is introduced from the pure water circulation path 29. The pure water produced by the pure water production device 21 is held in the supply water tank 22, and is supplied to the pure water circulation path 29 by the pump 30 after passing a degassing device. In the pure water circulation path 29, the pure water in the path is efficiently circulated by the pump 30. As a result, a temperature of the pure water in the pure water circulation path 29 is made uniform, and even if the temperature of the pure water supplied from the pure water production device 21 changes, a temperature change in the system can be reduced. In view of a fact that the temperature of the pure water is controlled to be constant depending on a room temperature by circulation in the pure water circulation path 29, the supply water tank 22 may be omitted. A pure water equivalent amount used for diluting the concentrated internal standard solution is newly supplied to the pure water circulation path 29 by opening and closing of the solenoid valve 28 provided in an introduction portion of the pure water circulation path 29 and an operation of the pump 30.

Other configurations are the same as those of the second illustrative example.

In the present illustrative example configured as above, the same effect as those of the second embodiment can also be obtained.

### <Fourth illustrative example not forming part of the present invention>

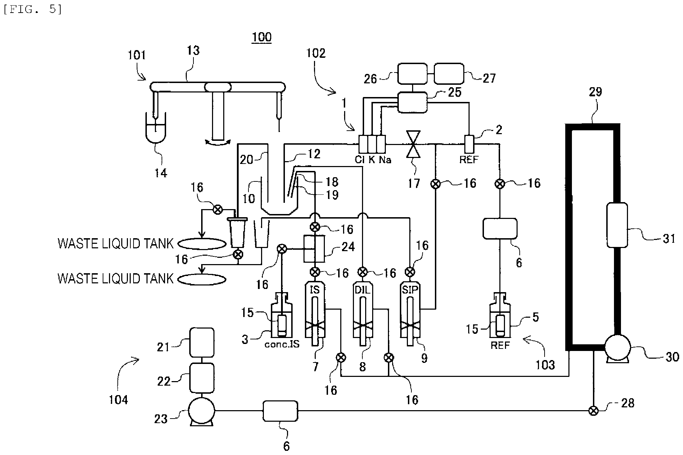

A fourth illustrative example of the invention will be described with reference to FIG. 5.

In the present illustrative example, a temperature control device for controlling a temperature of pure water is provided in the pure water circulation path in the third illustrative example.

FIG. 5 is a diagram schematically showing the entire configuration of an electrolyte analysis apparatus according to the present illustrative example. In the drawing, the same members as those of the third illustrative example are denoted by the same reference numerals, and descriptions thereof will be omitted.

In FIG. 5, the electrolyte analysis apparatus 100 includes a temperature control device 31 that controls the temperature of the pure water circulating in the pure water circulation path 29 to be constant. For example, the temperature control device 31 may monitor the temperature of circulating water with a thermocouple and control output of a heater based on the obtained temperature, and an embodiment of the temperature control device 31 is not limited. By providing the temperature control device 31 in the pure water circulation path 29, the temperature of the circulating pure water is controlled to be constant regardless of a room temperature or a temperature of supply water. That is, a temperature of an internal standard solution generated by diluting a concentrated internal standard solution with the pure water introduced from the pure water circulation path 29 is also controlled to be constant regardless of an environmental temperature. Accordingly, stable measurement with high robustness against environmental changes can be performed.

Other configurations are the same as those of the third illustrative example.

In the present illustrative example configured as above, the same effect as those of the third illustrative example can also be obtained.

### <Fifth illustrative example not forming part of the present invention>

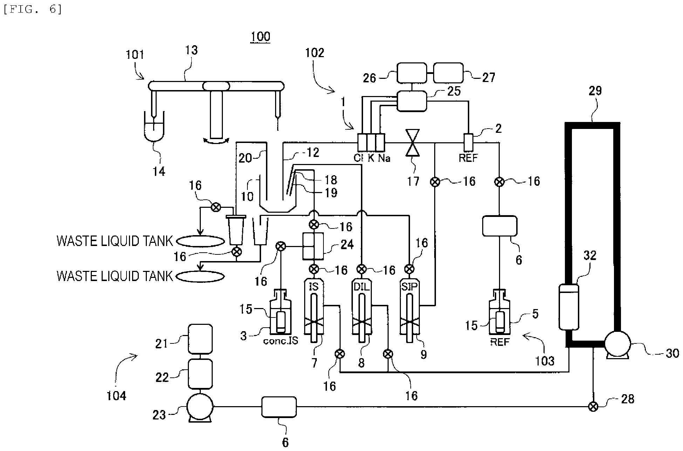

A fifth illustrative example will be described with reference to FIG. 6.

In the present illustrative example, a sterilizer for sterilizing pure water is provided in the pure water circulation path in the third illustrative example.

FIG. 6 is a diagram schematically showing the entire configuration of an electrolyte analysis apparatus according to the present illustrative example. In the drawing, the same members as those of the third illustrative example are denoted by the same reference numerals, and descriptions thereof will be omitted.

In FIG. 6, the electrolyte analysis apparatus 100 includes a sterilizer 32 that sterilizes pure water circulating in the pure water circulation path 29. In the pure water present in the pure water circulation path 29, proliferation of bacteria or the like may occur when the electrolyte analysis apparatus 100 is in a system off state and stagnation of the pure water occurs or when circulation continues for a long period of time. When properties of the pure water change due to the proliferation of bacteria, an ion concentration of a target specimen may not be appropriately obtained. In addition, a film may be generated in the flow path, which may also cause clogging of the flow path. Therefore, in the present illustrative example, the sterilizer 32 is provided in the pure water circulation path 29 in order
to prevent an influence of the proliferation of bacteria. The sterilizer 32 sterilizes the pure water in the flow path in a contactless manner using, for example, ultraviolet rays. When the sterilizer 32 using a generally used liquid is used, it is necessary to select the sterilizer 32 based on an ion concentration and a chemical reaction contained in the liquid for sterilization. By applying the sterilizer 32 that sterilizes the pure water to the pure water circulation path 29, stable measurement can be performed even in long-term use.

Other configurations are the same as those of the third illustrative example.

In the present illustrative example configured as above, the same effect as those of the third illustrative example can also be obtained.

### <Embodiment according to the present invention>

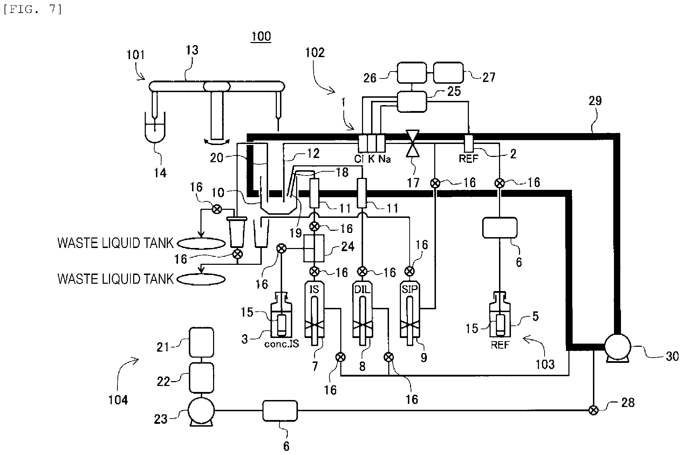

An embodiment of the invention will be described with reference to FIG. 7.

In the present embodiment, the pure water circulation path in the third illustrative example is provided so as to pass through the analysis unit 102 that measures a reagent by an ion selective electrode, the dilution tank 10 for diluting a specimen to be measured with pure water, and the preheating unit 11 that heats the reagent generated by the reagent generation unit (the reagent unit 103 and the mechanism unit 104).

FIG. 7 is a diagram schematically showing the entire configuration of an electrolyte analysis apparatus according to the present embodiment. In the drawing, the same members as those of the third illustrative example are denoted by the same reference numerals, and descriptions thereof will be omitted.

In FIG. 7, the pure water circulation path 29 of the electrolyte analysis apparatus 100 is configured to pass through the ion selective electrode 1, the dilution tank 10, and preheating units 11 provided for an internal standard solution portion and a diluent portion, and to keep these parts constant at a temperature of circulating water. However, the pure water circulation path 29 may be configured to pass through only a part of these parts, that is, to keep temperatures of only a part of these parts constant. In addition, the pure water circulation path 29 may pass through another path. When the pure water circulation path 29 is configured such that the entire system related to measurement is kept constant at the temperature of the circulating water as in the present embodiment, stable measurement can be performed with less temperature changes. A temperature of an internal standard solution produced by using the pure water introduced from the circulating water is substantially equal to a temperature of the pure water used for dilution. Therefore, even when the preheating unit 11 is provided, it is advantageous in space reduction of the unit and configuration simplification as compared with a system in which a concentrated reagent is diluted with pure water.

Other configurations are the same as those of the third illustrative example.

In the present embodiment configured as above, the same effect as those of the third illustrative example can also be obtained.

### <Appendix>

The invention is not limited to the embodiment described above, and includes various modifications and combinations without departing from the gist of the invention as defined in the appended claims. In addition, the invention is not limited to the configuration including all the configurations described in the above embodiment, and includes a configuration in which a part of the configuration is deleted. Each of the configurations, functions, and the like as described above may be implemented by designing a part or all of the configurations, functions, and the like in, for example, an integrated circuit. The configurations, functions, and the like as described above may also be implemented by software by a processor interpreting and executing a program for implementing respective functions.

### Reference Sign List

1 ion selective electrode (ISE)
2 reference electrode
3 concentrated internal standard solution bottle
4 diluent bottle
5 reference electrode solution bottle
6 degassing mechanism
7 internal standard solution syringe
8 diluent syringe
9 sipper syringe
10 dilution tank
11 preheating unit
12 sipper nozzle
13 specimen dispensing mechanism
14 specimen vessel
15 filter
16 solenoid valve
17 pinch valve
18 diluent nozzle
19 internal standard solution nozzle
20 waste liquid suction nozzle
21 pure water production device
22 supply water tank
23 appropriate pump
23 pump
24 dilution and restoration unit
25 voltmeter
26 amplifier
27 computer
28 solenoid valve
29 pure water circulation path
30 pump
31 temperature control device
32 sterilizer
100 electrolyte analysis apparatus
101 specimen dispensing unit
102 analysis unit
103 reagent unit
104 mechanism unit

## Claims

1. An electrolyte analysis apparatus (100) configured to measure the concentration of a specific ion in a specimen based on the result of measuring a reagent having a predetermined ion concentration with an ion selective electrode (1) and the result of measuring the specimen with the ion selective electrode (1), comprising:
an analysis unit (102) including an ion selective electrode (1) for measuring the reagent,
a dilution tank (10) for diluting the specimen to be measured with pure water,
a pump (30),
a reagent generation unit (103, 104) for diluting and restoring a reagent stock solution having a concentration higher than a predetermined ion concentration with pure water to generate a reagent having the predetermined ion concentration,
wherein
the reagent generation unit (103, 104) is configured to generate the reagent by mixing the reagent stock solution and the pure water passing through a circulation path (29) in a volume ratio such that the absolute value of the temperature difference between the reagent obtained by the dilution and restoration, and the pure water is smaller than the absolute value of the temperature difference between the reagent obtained by the dilution and restoration, and the reagent stock solution,
the electrolyte analysis apparatus (100) being **characterized in that** a reagent preheating region (11) for heating the reagent generated by the reagent generation unit (103, 104) is present, and the circulation path (29) is configured to circulate, by the
pump (30), the pure water used for the dilution of the reagent stock solution to pass through the analysis unit (102), the dilution tank (10) and said reagent preheating region (11).

2. The electrolyte analysis apparatus (100) according to claim 1, wherein the reagent generation unit (103, 104) is configured to perform the dilution and restoration of the reagent stock solution with the pure water passing through the circulation path (29) to generate the reagent such that a volume ratio of the pure water to the reagent stock solution becomes 16 times or more.

3. The electrolyte analysis apparatus (100) according to claim 1, further comprising:
a specimen dilution unit (101, 10, 103, 104) for diluting a specimen to be analyzed with pure water to generate a diluted specimen,
wherein the specimen dilution unit (101, 10, 103, 104) is configured to generate the diluted specimen such that the absolute value of the temperature difference between the diluted specimen and the pure water is smaller than the absolute value of the temperature difference between the specimen and the diluted specimen.

4. The electrolyte analysis apparatus (100) according to claim 1 or 2, further comprising:
a temperature control device (31) provided in the circulation path (29) for controlling the temperature of the pure water circulated in the circulation path (29).

5. The electrolyte analysis apparatus (100) according to claim 1 or 2, further comprising:
a sterilizer (32) provided in the circulation path (29) for sterilizing the pure water circulated in the circulation path (29).

## Patentansprüche

1. Elektrolytanalysator (100), der dazu konfiguriert ist, die Konzentration eines spezifischen Ions in einer Probe basierend auf dem Ergebnis der Messung eines Reagens mit einer vorbestimmten Ionenkonzentration mit einer ionenselektiven Elektrode (1) und dem Ergebnis der Messung der Probe mit der ionenselektiven Elektrode (1) zu messen, umfassend:
eine Analyseeinheit (102), die eine ionenselektive Elektrode (1) zum Messen des Reagens, einen Verdünnungstank (10) zum Verdünnen der zu messenden Probe mit reinem Wasser und eine Pumpe (30) umfasst,
eine Reagens-Erzeugungseinheit (103, 104) zum Verdünnen und Wiederherstellen einer Reagens-Stammlösung mit einer höheren Konzentration als eine vorbestimmte Ionenkonzentration mit reinem Wasser, um ein Reagens mit der vorbestimmten Ionenkonzentration zu erzeugen,
wobei die Reagens-Erzeugungseinheit (103, 104) dazu konfiguriert ist, das Reagens durch Mischen der Reagens-Stammlösung und des reinen Wassers, das durch einen Zirkulationspfad (29) fließt, in einem Volumenverhältnis zu erzeugen, so dass der absolute Wert der Temperaturdifferenz zwischen dem durch die Verdünnung und Wiederherstellung erhaltenen Reagens und dem reinen Wasser kleiner ist als der absolute Wert der Temperaturdifferenz zwischen dem durch die Verdünnung und Wiederherstellung erhaltenen Reagens und der Reagens-Stammlösung,
wobei der Elektrolytanalysator (100) **dadurch gekennzeichnet, dass**
eine Reagens-Vorheizregion (11) zum Erwärmen des von der Reagens-Erzeugungseinheit (103, 104) erzeugten Reagens vorhanden ist, und
der Zirkulationspfad (29) dazu konfiguriert ist, durch die Pumpe (30) das für die Verdünnung der Reagens-Stammlösung verwendete reine Wasser durch die Analyseeinheit (102), den Verdünnungstank (10) und die Reagens-Vorheizregion (11) zirkulieren zu lassen.

2. Elektrolytanalysator (100) nach Anspruch 1, wobei die Reagens-Erzeugungseinheit (103, 104) dazu konfiguriert ist, die Verdünnung und Wiederherstellung der Reagens-Stammlösung mit dem durch den Zirkulationspfad (29) fließenden reinen Wasser durchzuführen, um das Reagens so zu erzeugen, dass ein Volumenverhältnis des reinen Wassers zur Reagens-Stammlösung 16-mal oder mehr beträgt.

3. Elektrolytanalysator (100) nach Anspruch 1, ferner umfassend:
eine Probenverdünnungseinheit (101, 10, 103, 104) zum Verdünnen einer zu analysierenden Probe mit reinem Wasser, um eine verdünnte Probe zu erzeugen,
wobei die Probenverdünnungseinheit (101, 10, 103, 104) dazu konfiguriert ist, die verdünnte Probe so zu erzeugen, dass der absolute Wert der Temperaturdifferenz zwischen der verdünnten Probe und dem reinen Wasser kleiner ist als der absolute Wert der Temperaturdifferenz zwischen der Probe und der verdünnten Probe.

4. Elektrolytanalysator (100) nach Anspruch 1 oder 2, ferner umfassend:
eine Temperaturregelvorrichtung (31), die im Zirkulationspfad (29) vorgesehen ist, um die Temperatur des im Zirkulationspfad (29) zirkulierten reinen Wassers zu regeln.

5. Elektrolytanalysator (100) nach Anspruch 1 oder 2, ferner umfassend:
einen Sterilisator (32), der im Zirkulationspfad (29) vorgesehen ist, um das im Zirkulationspfad (29) zirkulierte reine Wasser zu sterilisieren.

## Revendications

1. Appareil (100) d'analyse d'électrolyte configuré pour mesurer la concentration d'un ion spécifique dans un échantillon sur la base du résultat de mesure d'un réactif ayant une concentration d'ion prédéterminée avec une électrode (1) sélective d'ions et du résultat de mesure de l'échantillon avec l'électrode (1) sélective d'ions, comprenant :
une unité (102) d'analyse incluant une électrode (1) sélective d'ions pour mesurer le réactif,
une cuve (10) de dilution pour diluer l'échantillon à mesurer avec de l'eau pure,
une pompe (30),
une unité (103, 104) de génération de réactif pour diluer et restaurer une solution mère de réactif ayant une concentration supérieure à une concentration d'ion prédéterminée avec de l'eau pure pour générer un réactif ayant la concentration d'ion prédéterminée,
dans lequel
l'unité (103, 104) de génération de réactif est configurée pour générer le réactif en mélangeant la solution mère de réactif et l'eau pure passant à travers un chemin (29) de circulation dans un rapport volumique tel que la valeur absolue de la différence de température entre le réactif obtenu par la dilution et la restauration, et l'eau pure est plus petite que la valeur absolue de la différence de température entre le réactif obtenu par la dilution et la restauration et la solution mère de réactif,
l'appareil (100) d'analyse d'électrolyte étant **caractérisé en ce que**
une région (11) de préchauffage de réactif pour chauffer le réactif généré par l'unité (103, 104) de génération de réactif est présente, et
le chemin (29) de circulation est configuré pour faire circuler, par la pompe (30), l'eau pure utilisée pour la dilution de la solution mère de réactif pour qu'elle passe à travers l'unité (102) d'analyse, la cuve (10) de dilution, et ladite région (11) de préchauffage de réactif.

2. Appareil (100) d'analyse d'électrolyte selon la revendication 1, dans lequel l'unité (103, 104) de génération de réactif est configurée pour effectuer la dilution et la restauration de la solution mère de réactif avec l'eau pure passant à travers le chemin (29) de circulation pour générer le réactif de telle façon qu'un rapport volumique de l'eau pure sur la solution mère de réactif devient 16 fois ou plus.

3. Appareil (100) d'analyse d'électrolyte selon la revendication 1, comprenant en outre :
une unité (101, 10, 103, 104) de dilution d'échantillon pour diluer un échantillon à analyser avec de l'eau pure pour générer un échantillon dilué,
dans lequel l'unité (101, 10, 103, 104) de dilution d'échantillon est configurée pour générer l'échantillon dilué de telle façon que la valeur absolue de la différence de température entre l'échantillon dilué et l'eau pure est plus petite que la valeur absolue de la différence de température entre l'échantillon et l'échantillon dilué.

4. Appareil (100) d'analyse d'électrolyte selon la revendication 1 ou 2, comprenant en outre :
un dispositif (31) de commande de température prévu dans le chemin (29) de circulation pour commander la température de l'eau pure mise en circulation dans le chemin (29) de circulation.

5. Appareil (100) d'analyse d'électrolyte selon la revendication 1 ou 2, comprenant en outre :
un stérilisateur (32) prévu dans le chemin (29) de circulation pour stériliser l'eau pure mise en circulation dans le chemin (29) de circulation.
